# NEUE EUROPÄISCHE PATENTSCHRIFT

(11) **EP 1 434 973 B2**
(45) Veröffentlichungstag und Bekanntmachung des Hinweises auf die Entscheidung über den Einspruch: **14.10.2015**
(45) Hinweis auf die Patenterteilung: 11.01.2012
(21) Anmeldenummer: 02785137.7
(22) Anmeldetag: 01.10.2002
(51) Int. Cl.: G01D 5/244

(54) **VERFAHREN UND VORRICHTUNG ZUR POSITIONSBESTIMMUNG**
METHOD AND DEVICE FOR DETERMINING POSITION
PROCÉDÉ ET DISPOSITIF POUR DÉTERMINER UNE POSITION

(30) Priorität: 04.10.2001 DE 10149174
(43) Veröffentlichungstag der Anmeldung: 07.07.2004
(73) Patentinhaber: Dr. Johannes Heidenhain GmbH, 83292 Traunreut (DE)
(72) Erfinder: HAGL, Rainer, 83352 Altenmarkt (DE)
(74) Vertreter: Maikowski & Ninnemann
(86) Internationale Anmeldenummer: PCT/EP2002/010974
(87) Internationale Veröffentlichungsnummer: WO 2003/031916

(56) Entgegenhaltungen:
- EP-A- 0 293 479
- DE-A- 4 410 955
- D. MANN: "Verbesserte Auswertung von inkrementalen Gebersystemen durch Oversampling" LAGEREGELSEMINAR "FORTSCHRITTE IN DER REGELUNGS- UND ANTRIEBSTECHNIK", 13. - 14. November 1998, Seiten 1-20, XP008013551 in der Anmeldung erwähnt
- PRITSCHOW AND HILLER: 'Verfahren zur hochgenauen Erfassung von Zustandsgrössen an Maschinenachsen', 1998

## Beschreibung

Die Erfindung betrifft ein Verfahren zur Positionsbestimmung in einem Positionsmessgerät sowie ein Positionsmessgerät zur Ausführung des Verfahrens.

Positionsmessgeräte müssen vermehrt die Anforderungen hochdynamischer Antriebsregelungen erfüllen. Vermehrt werden auch Direktantriebe eingesetzt, mit denen eine hohe Regelgüte erreichbar ist. Voraussetzung hierfür ist eine genaue und dynamische Lage- und Geschwindigkeitserfassung. Die Lageerfassung beruht heute überwiegend auf inkrementellen oder absoluten Drehgebern bzw. Längenmessgebern. Durch die in den sinusförmigen Abtastsignalen enthaltene Amplitudeninformation wird mit Interpolationsschaltungen eine Lageinformation erzeugt, die eine vielfach höhere Auflösung besitzt als die Teilungsperiode des Positionsmessgeräts. Die Geschwindigkeit wird in der Regel durch zeitdiskrete Differentiation der Lage bestimmt und die Beschleunigung durch weitere Differentiation der Geschwindigkeit.

In den Unterlagen zum Lageregelseminar "Fortschritte in der Regelungs-und Antriebstechnik" vom 13. und 14. November 1998 findet sich ein Artikel mit dem Titel "Verbesserte Auswertung von inkrementalen Gebersystemen durch Oversampling" von D. Mann. In diesem Artikel ist angegeben, dass die Positionsbestimmung sowie die Geschwindigkeitsbestimmung durch Oversampling verbessert werden kann. Oversampling ist dabei definiert durch das Aufsummieren aller während eines Abtastschritts des Reglers (Folgeelektronik) ermittelten Lagewerte und anschließender Division durch deren Anzahl. Aus Bild 11 und Bild 15 ist ersichtlich, dass das Positionsmessgerät selbst nur die analogen Abtastsignale A und B liefert und die Weiterverarbeitung einschließlich des Oversampling-Verfahrens in der Folgeelektronik erfolgt. Die Übertragung analoger Positionsmesswerte ist aber relativ anfällig gegenüber Störungen und Rauschen und negativ ist auch die hohe Anzahl von benötigten Leitungen zwischen dem Positionsmessgerät und der Folgeelektronik.

Aufgabe der Erfindung ist es, ein Verfahren und ein Positionsmessgerät anzugeben, mit dem eine qualitativ gute und zuverlässige Regelung auf Basis der vom Positionsmessgerät auf einer seriellen Datenleitung gelieferten Positionsmesswerte ermöglicht wird.

Diese Aufgabe wird durch das im Anspruch 1 angegebene Verfahren gelöst.

Vorteilhafte Ausführungen des Verfahrens sind in den vom Anspruch 1 abhängigen Ansprüchen angeführt.

Die Aufgabe wird ferner durch das Positionsmessgerät mit den Merkmalen des Anspruchs 11 gelöst.

Vorteilhafte Ausführungsformen der erfindungsgemäßen Vorrichtung sind in den vom Anspruch 11 abhängigen Ansprüchen angegeben.

Mit der Erfindung ist eine Reduzierung von Leitungen zwischen dem Positionsmessgerät und der Folgeelektronik möglich, indem eine serielle Schnittstelle mit hohen Übertragungsraten verwendet wird. Es lassen sich an Antrieben das Positionierverhalten, das Gleichlaufverhalten, das Störverhalten sowie die Geräuschentwicklung verbessern.
Die serielle Schnittstelle kann auch zur Übertragung zeitunkritischer Daten, wie z.B. Parameter des Positionsmessgerätes, Überwachungsdaten bzw. Diagnosedaten genutzt werden.

Gemäß der Erfindung werden die Istwerte der Position und gegebenenfalls der Beschleunigung bereits im Positionsmessgerät mit hoher Taktfrequenz abgetastet und diese Istwerte durch Filterung, beispielsweise Mittelwertbildung oder Tiefpassfilter vorverarbeitet. Die dadurch gewonnenen resultierenden Istwerte werden anschließend über eine serielle Schnittstelle an die Folgeelektronik im Anforderungstakt übertragen.

Um einen exakten zeitlichen Bezug zum internen Takt der Folgeelektronik zu erreichen gibt es mehrere Möglichkeiten:
- von der Folgeelektronik wird ein kontinuierliches Taktsignal abgegeben, dessen Frequenz dem Abtasttakt entspricht oder dessen Frequenz davon abweicht, wobei bei einer Abweichung eine Frequenzvervielfachung oder Frequenzteilung erfolgt oder
- mit jedem Anforderungstakt wird ein messgeräteinterner Takt, beispielsweise ein Quarz bzw. eine PLL-Schaltung synchronisiert und damit die Überabtastung im Positionsmessgerät innerhalb eines von der Folgeelektronik vorgegebenen Taktzyklusses der Folgeelektronik gesteuert oder
- der Abtasttakt wird durch Taktrückgewinnung im Positionsmessgerät aus einem Datenstrom der Folgeelektronik gewonnen.

Zur Ermittlung der Positions- bzw. Beschleunigungs-Istwerte werden A/D-Wandler im Abtasttakt zur Messwertübernahme angesteuert.

Die Folgeelektronik ist insbesondere eine Antriebsregelung mit einem internen Reglertakt, von dem der Anforderungstakt abgeleitet ist. Der Abtasttakt ist zu diesem Anforderungstakt und somit zu dem Reglertakt synchronisiert.

Durch die Erfindung ist eine geringe Anzahl von Signalleitungen zwischen dem Positionsmessgerät und der Folgeelektronik realisierbar. Es reichen 6 Signalleitungen oder weniger aus, nämlich zwei für den Takt, zwei für die Spannungsversorgung und zwei für die Messwerte (Daten). Der Takt kann auch auf den Leitungen der Spannungsversorgung übertragen werden.

Möchte man bei Positionsmessgeräten Beschleunigungs-Istwerte von integrierten oder in der Nähe angebauten Beschleunigungssensoren nutzen und diese auch überabtasten, so wird dadurch die Anzahl der Signalleitungen nicht erhöht, da auch diese Daten seriell auf der Datenleitung übertragbar sind. Die Parametrierung der Überabtastung, wie z.B. die Anzahl der Abtastzeitpunkte für die Istwerte im Vergleich zum Übertragungstakt bzw. zum Reglertakt, der Filtertyp, der Filterparameter lassen sich über die bidirektionale Schnittstelle von der Folgeelektronik aus einstellen.

Nachfolgend wird die Erfindung anhand von in der Zeichnung dargestellten Ausführungsbeispielen näher erläutert.

Es zeigt
- Figur 1: eine Prinzipdarstellung eines Positionsmessgeräts gemäß der Erfindung,
- Figur 2: eine Verarbeitungseinheit des Positionsmessgeräts gemäß Figur 1,
- Figur 3: ein Signaldiagramm;
- Figur 4: eine Schaltungsanordnung zur Gewinnung des Abtasttaktes aus dem Anforderungstakt;
- Figur 5: ein Prinzip zur Taktrückgewinnung im Positionsmessgerät;
- Figur 6: eine Schaltungsanordnung zur Taktrückgewinnung und;
- Figur 7: eine Schaltungsanordnung mit separater Taktleitung.

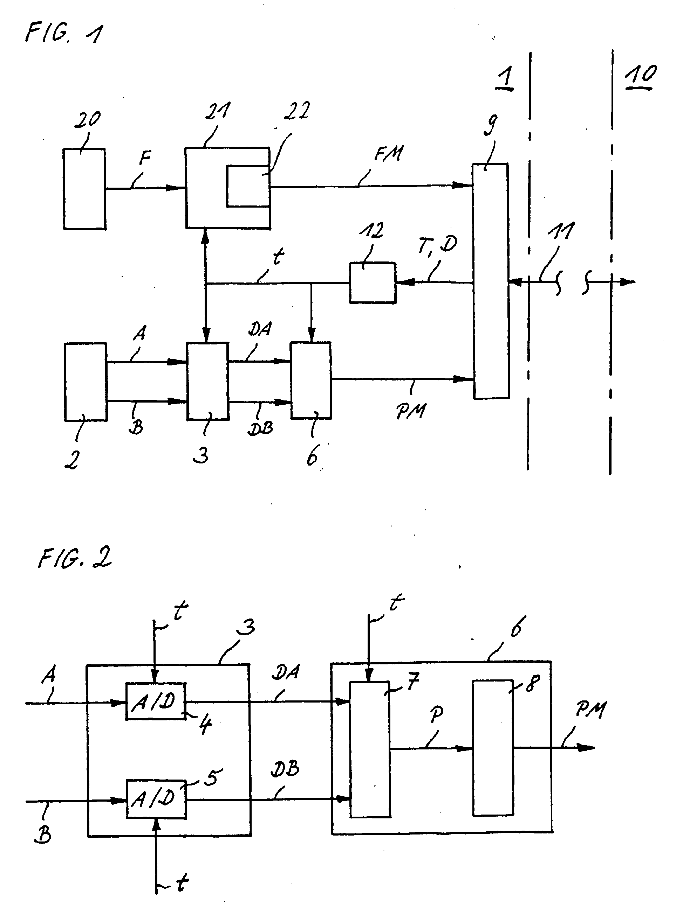

Das in Figur 1 dargestellte Positionsmessgerät 1 besteht aus einer Detektoreinheit 2, an dessen Ausgang mehrere gegeneinander um 90° phasenverschobene analoge Abtastsignale A, B anstehen. Eine derartige Detektoreinheit 2 ist an sich bekannt, wobei die Abtastsignale A, B durch lichtelektrische, magnetische, induktive oder kapazitive Abtastung einer inkrementalen Teilung erzeugt werden oder von einem Interferometer stammen. Die Abtastsignale A, B sind in der Regel sinusförmig.

Die Abtastsignale A, B werden einer Übernahmeeinheit 3 zugeführt, die die Momentanwerte der Abtastsignale A, B in einem vorgegebenen Abtasttakt t zeitgleich übernimmt (sampled) und digitalisiert. Wie in Figur 2 dargestellt ist, wird die Übernahme und Digitalisierung durch A/D-Wandier 4 und 5 realisiert.

Die zeitgleich übernommenen Wertepaare der digitalisierten Abtastsignale DA, DB werden einer Verarbeitungseinheit 6 zugeführt, in der aus mehreren derartigen Wertepaaren ein resultierender Positionsmesswert PM gebildet wird.

Ein Ausführungsbeispiel der Verarbeitungseinheit 6 ist in Figur 2 dargestellt. Sie besteht aus einer Interpolationseinheit 7, in der aus jedem Wertepaar der digitalen Abtastsignale DA, DB zu jedem Abtasttakt t ein Interpolationswert P, also ein Positionsmesswert innerhalb einer Signalperiode der analogen Abtastsignale A, B gebildet wird. Diese Interpolation erfolgt in an sich bekannter Weise z. B. mit Hilfe einer Tabelle oder einer arctan-Berechnung.

Der Interpolationseinheit 7 nachgeordnet ist ein Filter 8, dem die den einzelnen Abtastakten t zugeordneten Interpolationswerte P zugeführt werden. Das Filter 8 bildet aus mehreren aufeinanderfolgenden Interpolationswerten P den resultierenden Positionsmesswert PM. Die Funktion des Filters 8 ist beispielsweise eine Mittelwertbildung aufeinanderfolgender Interpolationswerte P innerhalb zweier Übertragungs- bzw. Anforderungstakte T. Der Filter 8 kann aber auch ein Tiefpassfilter sein, um aus mehreren aufeinanderfolgenden Interpolationswerten P einen gemeinsamen resultierenden Positionsmesswert PM zu bilden. Der Filter 8 ist vorzugsweise ein Digitalfilter in Form eines Verzögerungsgliedes 1. oder 2. Ordnung, bzw. ein FIR- oder IIR-Filter. Diese Filter realisieren eine gewichtete Mittelwertbildung, wobei die zuletzt abgetasteten Messwerte höher gewichtet werden, als die vorhergehenden Messwerte. Dieser resultierende Positionsmesswert PM wird auf Anforderung von dem Positionsmessgerät 1 zu einer Folgeelektronik 10 übertragen. Die Anforderung erfolgt aufgrund eines von der Folgeelektronik 10 zu der bidirektionalen seriellen Schnittstelle 9 des Positionsmessgeräts 1 vorgegebenen Übertragungstaktes T.

Um den exakten zeitlichen Bezug des Übertragungstakts T zu dem Abtasttakt 1 für die Positionsmesswerte bzw. - wie später noch erläutert - für die Beschleunigungswerte im Messgerät 1 zu erreichen, also eine Synchronisation zu gewährleisten, gibt es mehrere Möglichkeiten.

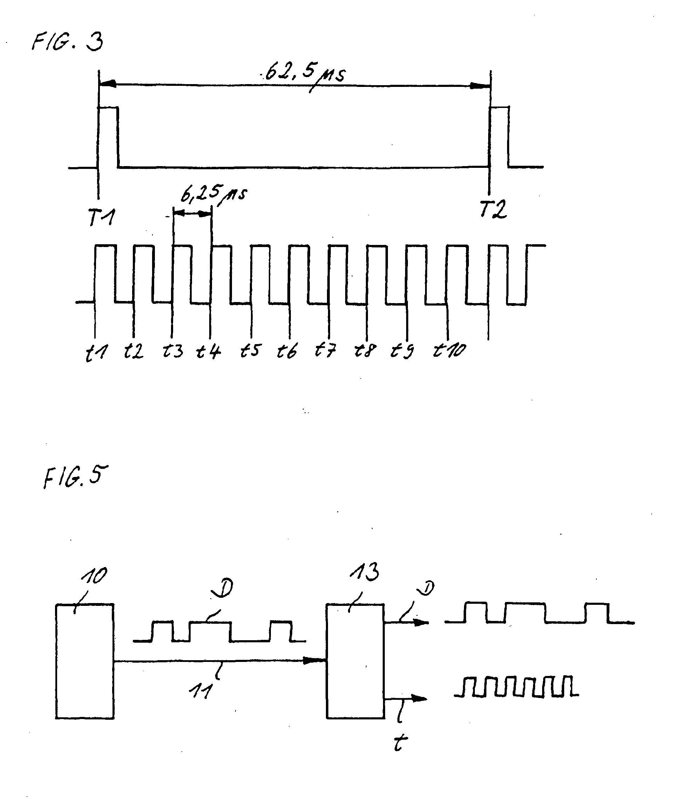

Eine Möglichkeit der Synchronisation der Takte T und t besteht darin, dass von der Folgeelektronik 10 nur die Übertragungstakte T an das Positionsmessgerät 1 übertragen werden, und dass der Taktgeber 12 diesen Takt T in den Abtasttakt t teilt. Diese Möglichkeit ist anhand der Signaldiagramme in Figur 3 verdeutlicht. Dabei wird der von der Folgeelektronik 10 zum Positionsmessgerät 1 übertragene Übertragungstakt T in 10 Abtasttakte t₁ bis t₁₀ geteilt. Diese Frequenzverfielfachung erfolgt beispielsweise durch eine PLL-Schaltung (Phase Locked Loop = Phasenregelschleife), wobei das Oversamplingverfahren erst nach erfolgreichem Einschwingen der PLL aktiviert wird. Zum Zeitpunkt T2 wird ein resultierender Positionsmesswert PM aus den 10 den Zeitpunkten t₁ bis t₁₀ zugeordneten Interpolationswerten P seriell als mehrstelliges Codewort von dem Positionsmessgerät 1 zu der Folgeelektronik 10 übertragen. Der Taktzyklus vom Takt T beträgt beispielsweise 62,5 µsec und der Taktzyklus t 6,25 µsec.

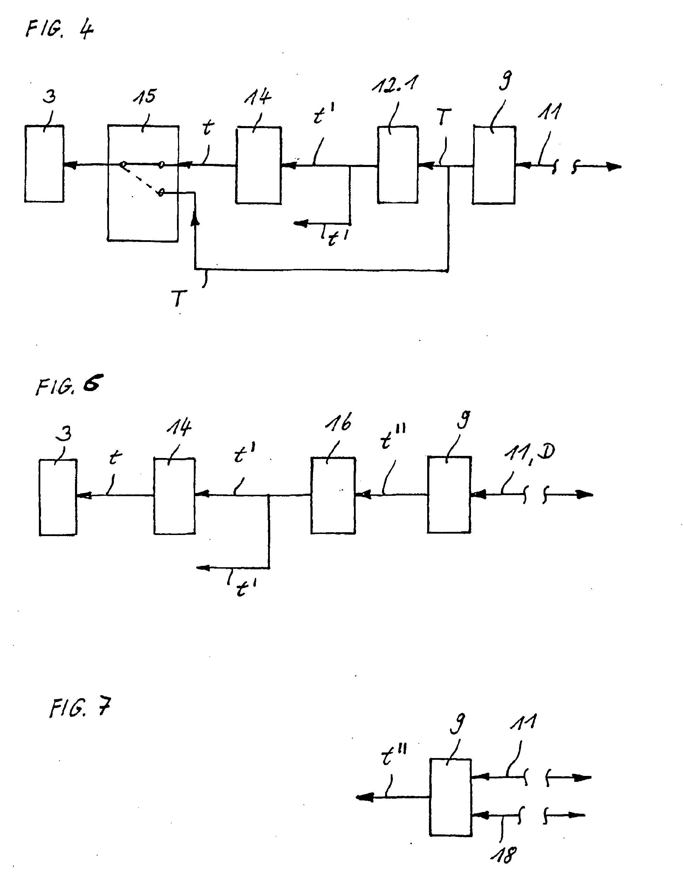

Ein Schaltungsbeispiel mit einer PLL-Schaltung 12.1 ist in Figur 4 dargestellt. Der über die serielle Datenleitung 11 übertragene Anforderungstakt T gelangt über die Schnittstelle 9 zum Positionsmessgerät 1 und wird der PLL-Schaltung 12.1 zugeführt. Die PLL-Schaltung 12.1 generiert synchronisiert zum Anforderungstakt T direkt den Abtasttakt t oder, wie im Beispiel dargestellt einen für den internen Betrieb des Positionsmessgerätes 1 erforderlichen internen Takt t', mit dem insbesondere ein interner Prozessor getaktet wird. Dieser interne Takt t'wird mittels eines Frequenzteilers 14 in den Abtasttakt t gewandelt. Die PLL-Schaltung 12.1 benötigt nach der Inbetriebnahme eine bestimmte Zeit, bis eine Synchronisation gewährleistet ist. Daher ist es vorteilhaft, wenn über eine Logik 15 die Messwertübernahme im Anforderungstakt T erfolgt und erst nach erfolgreichem Einschwingen der PLL-Schaltung mittels der Logik 15 eine Umschaltung auf die Übernahme im Abtasttakt t erfolgt. Der Anforderungstakt T hat beispielsweise eine Frequenz fT von 20 kHz, dann ist die Frequenz vom internen Takt t': Ft'=FT/M*N und die Frequenz vom Abtasttakt t: Ft=FT/N mit N und M ganze Zahlen und größer Null. N und M sind somit Parameter, welche die Anzahl der Abtasttakte t innerhalb zweier Übertragungstakte T festlegen und die über die serielle Datenleitung 11 von der Folgeelektronik 10 zum Positionsmessgerät 1 übertragen und dort abgespeichert werden können.

Eine weitere, besonders vorteilhafte Möglichkeit der Synchronisation zwischen der Folgeelektronik 10 und dem Positionsmessgerät 1 besteht darin, dass aus einem Datenstrom D der Folgeelektronik 10 durch Taktrückgewinnung in dem Positionsmessgerät 1 der Abtasttakt t generiert wird. Dieses Prinzip ist in Figur 5 dargestellt. Aufgrund der Flankenwechsel im Datenstrom D der Folgeelektronik 10 wird im Baustein 13 der diesem Flankenwechsel zugrunde liegende Grundtakt ermittelt. Aus diesem Grundtakt wird der Abtasttakt t generiert. Da dieser Grundtakt vom Reglertakt der Folgeelektronik (Antriebsregelung) abgeleitet ist, ist die Synchronisation mit dem Reglertakt gewährleistet.

In Figur 6 ist ein Schaltungsbeispiel dargestellt, bei dem über einen Frequenzwandler 16 in Form eines Frequenzvervielfachers aus dem Grundtakt t" des Datenstroms D der interne Takt t' sowie daraus wiederum über den Frequenzteiler 14 der Abtasttakt t gewonnen wird.

Diese Schaltung kann auch verwendet werden, wenn eine synchron serielle Schnittstelle Anwendung findet, bei der neben der Datenleitung 11 - auf der der Datenstrom D übertragen wird - über eine separate Taktleitung 18 der Takt t" von der Folgeelektronik 10 zum Positionsmessgerät 1 übertragen wird, wie in Figur 7 bnschematisch dargestellt.

Die Schnittstelle 9 ist eine bidirektionale serielle Schnittstelle, über die auch eine Parametrisierung des Positionsmessgeräts 1 möglich ist. Diese Parametrisierung ist beispielsweise die Festlegung der Anzahl der Abtasttakte t innerhalb zweier aufeinanderfolgender Übernahmetakte T. Diese Anzahl kann über die Datenleitung 11 zu dem Positionsmessgerät 1 übertragen und dort abgespeichert werden. Eine weitere Parametrisierung ist die Einstellung des Filtertyps, das heißt die Funktion bzw. die Filterparameter des Filters 8. Die Filterung und/oder die Anzahl der Abtasttakte t innerhalb zweier aufeinanderfolgender Übertragungstakte T kann auch abhängig von der Momentangeschwindigkeit der Maschinenteile eingestellt werden, deren Position ermittelt wird.

Aus der EP 0 661 543 A1 ist bekannt, dass vorteilhafterweise ein Positionsmessgerät 1 außer der Position auch eine Beschleunigung erfasst und ausgibt. Hierzu ist dem Positionsmessgerät 1 zusätzlich ein Beschleunigungsgeber zugeordnet, insbesondere darin integriert, welcher nach dem Ferraris-Prinzip arbeitet. Die Erfindung kann auch bei einer derartigen Anordnung vorteilhaft eingesetzt werden, wie in Figur 1 schematisch dargestellt ist. Ein Beschleunigungsaufnehmer 20 erfasst die Beschleunigung des Objekts, dessen Position gemäß obiger Beschreibung gemessen wird. Die gemessenen Beschleunigungswerte F werden im Abtasttakt t einer Verarbeitungseinheit 21 zugeführt, die Verarbeitungseinheit 21 enthält wiederum einen Filter 22, der mehrere aufeinanderfolgende Momentanwerte F der Beschleunigung zu einem resultierenden Beschleunigungswert FM kombiniert, der dann mit dem Übertragungstakt T zur Folgeelektronik 10 übertragen wird. Die Anzahl der miteinander kombinierten Beschleunigungswerte F entspricht wiederum der Anzahl von Abtasttakten t zwischen zwei aufeinanderfolgenden Übernahmetakten T. Die Funktion des Filters 22 ist beispielsweise eine Mittelwertbildung oder der Filter 22 ist ein Digitalfilter in Form eines Verzögerungsgliedes 1. oder 2. Ordnung, der eine gewichtete Mittelwertbildung veranlasst. Übertragen wird der resultierende Beschleunigungswert FM seriell über die Schnittstelle 9 auf der seriellen Datenleitung 11, beispielsweise nach der Übertragung des resultierenden Positionsmesswertes PM. So dass nach jeder Anforderung von der Folgeelektronik 10, also nach jedem Übertragungstakt T von dem Positionsmessgerät 1 ein serieller Datenstrom bestehend aus einem seriellen Codewort, das den resultierenden Positionsmesswert PM definiert und aus einem seriellen Codewort, das den resultierenden Beschleunigungswert FM definiert übertragen wird.

Die Anzahl der Abtasttakte t zwischen zwei Übertragungstakten T zur Bildung eines resultierenden Positionsmesswertes PM kann von den Abtasttakten t zur Bildung eines resultierenden Beschleunigungsmesswertes FM verschieden sein. Die Anzahl der Abtasttakte t oder die Filterparameter können für beide Messwerte P, F abhängig von der Geschwindigkeit des bewegten Objektes gewählt und adaptiv eingestellt werden.

## Patentansprüche

1. Verfahren zur Positionsbestimmung in einem Positionsmessgerät (1) mit folgenden Schritten:
- Erzeugen von positionsabhängigen Abtastsignalen (A, B) einer Detektoreinheit (2),
- Übernahme von Momentanwerten (DA, DB) der Abtastsignale (A, B) in einem vorgegebenen Abtasttakt (t), welcher in dem Positionsmessgerät (1) synchronisiert zu einem von der Folgeelektronik (10) bereitgestellten Takt (T, D, t") generiert wird,
- Bilden von den Abtasttakten (t) zugeordneten Positionswerten (P) aus den übernommenen Abtastsignalen (DA, DB),
- Bilden eines resultierenden Positionsmesswertes (PM) aus mehreren Positionswerten (P) durch Filterung,
- serielles Übertragen dieses resultierenden Positionsmesswertes (PM) auf einer seriellen Datenleitung (11) zu einer Folgeelektronik (10).

2. Verfahren nach Anspruch 1, **dadurch gekennzeichnet, dass** die positionsabhängigen Abtastsignale (A, B) gegeneinander phasenverschobene sinusförmige Analogsignale sind, wobei jedes dieser Analogsignale (A, B) zum Zeitpunkt des Abtasttaktes (t) digitalisiert wird und jeweils aus den Digitalwerten (DA, DB) der gegeneinander phasenverschobenen Abtastsignale (A, B) ein Positionswert (P) gebildet wird.

3. Verfahren nach Anspruch 1, **dadurch gekennzeichnet, dass** von der Folgeelektronik (10) ein kontinuierliches Taktsignal (T, t") zum Positionsmessgerät (1) abgegeben wird, aus dem im Positionsmessgerät (1) der Abtasttakt (t) durch Frequenzvervielfachung gewonnen wird.

4. Verfahren nach Anspruch 1, **dadurch gekennzeichnet, dass** der resultierende Positionsmesswert (PM) auf Anforderung von dem Positionsmessgerät (1) zu der Folgeelektronik (10) übertragen wird, wobei die Anforderung aufgrund eines von der Folgeelektronik (10) zu der bidirektionalen seriellen Schnittstelle (9) des Positionsmessgeräts (1) vorgegebenen Übertragungstaktes (T) erfolgt, wobei weiterhin zur Synchronisation der Übertragungstakte (T) und der Abtasttakte (t) von der Folgeelektronik die Übertragungstakte (T) an das Positionsmessgerät (1) übertragen werden, und dass ein Taktgeber (12) des Positionsmessgerätes (1) den Übertragungstakt (T) in den Abtasttakt (t) teilt.

5. Verfahren nach Anspruch 1, **dadurch gekennzeichnet, dass** der Abtasttakt (t) im Positionsmessgerät (1) durch Taktrückgewinnung aus einem Datenstrom (D) der Folgeelektronik (10) gewonnen wird.

6. Verfahren nach Anspruch 1 oder 2, **dadurch gekennzeichnet, dass** die Übertragung des resultierenden Positionsmesswertes (PM) durch einen Übertragungstakt (T) veranlasst wird, und dass die Folgeelektronik (10) eine Antriebsregelung mit einem internen Reglertakt aufweist, wobei der Übertragungstakt (T) und der Abtasttakt (t) mit diesem Reglertakt synchronisiert wird.

7. Verfahren nach Anspruch 6, **dadurch gekennzeichnet, dass** der Abtasttakt (t) durch Taktrückgewinnung aus einem Datenstrom (D) der Folgeelektronik (10) in dem Positionsmessgerät (1) gewonnen wird.

8. Verfahren nach Anspruch 1, **gekennzeichnet durch** folgende Schritte:
- Erzeugen eines beschleunigungsabhängigen Abtastsignals (F) eines Beschleunigungsaufnehmers (20),
- Übernahme von Momentanwerten des Abtastsignals (F) in einem vorgegebenen Abtasttakt (t),
- Bilden eines resultierenden Beschleunigungswertes (FM) aus mehreren Momentanwerten **durch** Filterung,
- serielles Übertragen dieses resultierenden Beschleunigungsmesswertes (FM) auf der seriellen Datenleitung (11).

9. Verfahren nach einem der vorhergehenden Ansprüche, **dadurch gekennzeichnet, dass** die Filterung und/oder die Anzahl der Abtasttakte (t) innerhalb zweier aufeinanderfolgender Übertragungstakte (T) über Parameter eingestellt wird, die über die serielle Datenleitung (11) zum Positionsmessgerät (1) übertragen werden.

10. Verfahren nach einem der vorhergehenden Ansprüche, **dadurch gekennzeichnet, dass** die Filterung und/oder die Anzahl der Abtasttakte (t) innerhalb zweier aufeinanderfolgender Übertragungstakte (T) abhängig von der Geschwindigkeit eingestellt wird.

11. Positionsmessgerät mit
- einer Detektoreinheit (2) zur Erzeugung mehrerer positionsabhängiger Abtastsignale (A, B),
- einer Übemahmeeinheit (3), die Momentanwerte der Abtastsignale (DA, DB) in einem vorgegebenen Abtasttakt (t) übernimmt,
- einem Taktgeber (12, 12.1), der die Abtasttakte (t) synchronisiert zu einem von der Folgeelektronik (10) bereitgestellten Takt (T, D, t") generiert,
- einer Verarbeitungseinheit (6), in der durch Filterung aus Momentanwerten (DA, DB) mehrerer Abtasttakte (t) ein resultierender Positionsmesswert (PM) gebildet wird,
- einer Schnittstelle (9), welche aufgrund eines Übertragungstaktes (T) den resultierenden Positionsmesswert (PM) auf einer seriellen Datenleitung (11) zu einer Folgeelektronik (10) überträgt.

12. Positionsmessgerät nach Anspruch 11, **dadurch gekennzeichnet, dass**
- die Übemahmeeinheit (3) zumindest einen A/D-Wandler aufweist und
- die Verarbeitungseinheit (6) eine Interpolationseinheit (7) zur Bildung von den Abtasttakten (t) zugeordneten Positionswerten (P) aus den digitalisierten Abtastsignalen (DA, DB) enthält, sowie einen Filter (8) zur Bildung des resultierenden Positionsmesswertes (PM) aus mehreren den Abtasttakten (t) zugeordneten Positionswerten (P).

13. Positionsmessgerät nach Anspruch 11, **dadurch gekennzeichnet, dass** der Taktgeber ein Baustein (13) zur Taktrückgewinnung des Abtasttaktes (t) aus einem an dem Positionsmessgerät (1) anstehenden Datenstrom (D) ist.

14. Positionsmessgerät nach einem der vorhergehenden Ansprüchen 11 bis 13, **dadurch gekennzeichnet, dass** dem Positionsmessgerät (1) ein Beschleunigungsaufnehmer (20) zur Erzeugung eines beschleunigungsabhängigen Abtastsignals (F) zugeordnet ist, und dass das Abtastsignal (F) einer Verarbeitungseinheit (21) zur Bildung eines resultierenden Beschleunigungswertes (FM) aus mehreren Momentanwerten zuführbar ist, wobei der resultierende Beschleunigungswert (FM) auf der seriellen Datenleitung (11) übertragbar ist.

## Claims

1. A method for determining the position in a position measuring device (1) by means of the following steps:
- generating position-dependent scanning signals (A, B) of a detector unit (2),
- taking over instantaneous values (DA, DB) of the scanning signals (A, B) at a predetermined scanning clock pulse (t), which is generated in the position measuring device (1) in a synchronized manner into a clock pulse (T, D, t"), which is provided by the subsequent electronics (10),
- forming position values (P), which are assigned to the scanning clock pulses (t), from the scanning signals (DA, DB), which have been taken over,
- forming a resulting position measuring value (PM) from a plurality of position values (P) by means of filtering,
- serial transmission of these resulting position measuring values (PM) on a serial data line (11) to a subsequent electronics (10).

2. The method according to claim 1, **characterized in that** the position-dependent scanning signals (A, B) are sinusoidal analog signals, which are phase-shifted relative to one another, wherein each of these analog signals (A, B) is digitized at the point of the scanning clock pulse (t) and a position value (P) is formed in each case from the digital values (DA, DB) of the scanning signals (A, B), which are phase-shifted relative to one another.

3. The method according to claim 1, **characterized in that** the subsequent electronics (10) emits a continuous clock pulse signal (T, t") to the position measuring device (1), from which the scanning clock pulse (t) is attained in the position measuring device (1) by means of frequency multiplication.

4. The method according to claim 1, **characterized in that** the resulting position measuring value (PM) is transmitted to the subsequent electronics (10) following a request by the position measuring device (1), wherein the request is made due to a predetermined transmission clock pulse (T) from the subsequent electronics (10) to the bidirectional serial interface (9) of the position measuring device (1), wherein, furthermore, the transmission clock pulses (T) are transmitted to the position measuring device (1) by the subsequent electronics for synchronizing the transmission clock pulses (T) and the scanning clock pulses (t), and **in that** a clock pulse generator (12) of the position measuring device (1) divides the transmission clock pulse (T) into the scanning clock pulse (t).

5. The method according to claim 1, **characterized in that** the scanning clock pulse (t) in the position measuring device (1) is attained from a data flow (D) of the subsequent electronics (10) by clock pulse recovery.

6. The method according to claim 1 or 2, **characterized in that** the transmission of the resulting position measuring value (PM) is triggered by a transmission clock pulse (T) and that the subsequent electronics (10) encompasses a drive regulation comprising an internal clock pulse, wherein the transmission clock pulse (T) and the scanning clock pulse (t) are synchronized with this clock pulse.

7. The method according to claim 6, **characterized in that** the scanning clock pulse (t) is attained by clock pulse recovery from a data flow (D) of the subsequent electronics (10) in the position measuring device (1).

8. The method according to claim 1, **characterized by** the following steps:
- generating an acceleration-dependent scanning signal (F) of an acceleration sensor (20),
- taking over instantaneous values of the scanning signal (F) in a predetermined scanning clock pulse (t),
- forming a resulting acceleration value (FM) from a plurality of instantaneous values by means of filtering,
- serial transmission of this resulting acceleration measuring value (FM) on the serial data line (11).

9. The method according to one of the preceding claims, **characterized in that** the filtering and/or the number of the scanning clock pulses (t) within two consecutive transmission clock pulses (T) is adjusted via parameters, which are transmitted to the position measuring device (1) via the serial data line (11).

10. The method according to one of the preceding claims, **characterized in that** the filtering and/or the number of the scanning clock pulses (t) within two subsequent transmission clock pulses (T) is adjusted as a function of the speed.

11. A position measuring device comprising
- a detector unit (2) for generating a plurality of position-dependent scanning signals (A, B),
- a take-over unit (3), which takes over the instantaneous values of the scanning signals (DA, DB) at a predetermined scanning clock pulse (t),
- a clock pulse generator (12, 12.1), which generates the scanning clock pulses (t) to a clock pulse (T, D, t"), which is provided by the subsequent electronics (10), in a synchronized manner,
- a processing unit (6), in which a resulting position measuring value (PM) is formed by filtering from instantaneous values (DA, DB) of a plurality of scanning clock pulses (t),
- an interface (9), which transmits the resulting position measuring value (PM) on a serial data line (11) to a subsequent electronics (10) due to a transmission clock pulse (T).

12. The position measuring device according to claim 11, **characterized in that**
- the take-over unit (3) encompasses at least one analog/digital converter and
- the processing unit (6) includes an interpolation unit (7) for forming position values (P), which are assigned to the scanning clock pulses (t), from the digitized scanning signals (DA, DB), as well as a filter (8) for forming the resulting position measuring value (PM) from a plurality of the position values (P), which are assigned to the scanning clock pulses (t).

13. The position measuring device according to claim 11, **characterized in that** the clock pulse generator is a component (13) for the clock pulse recovery of the scanning clock pulse (t) from a data flow (D), which is present at the position measuring device (1).

14. The position measuring device according to one of the preceding claims 11 to 13, **characterized in that** an acceleration sensor (20) is assigned to the position measuring device (1) for generating an acceleration-dependent scanning signal (F) and that the scanning signal (F) can be supplied to a processing unit (21) for forming a resulting acceleration value (FM) from a plurality of instantaneous values, wherein the resulting acceleration value (FM) can be transmitted on the serial data line (11).

## Revendications

1. Procédé pour la détermination de la position dans un dispositif de mesure de position (1), avec les étapes suivantes :
- production de signaux de détection (A, B) dépendant de la position d'une unité de détection (2),
- réception de valeurs instantanées (DA, DB) des signaux de détection (A, B) à une cadence de détection (t) prédéterminée, générée dans le dispositif de mesure de position (1) de façon synchronisée à une cadence (T, D, t") fournie par l'électronique d'aval (10),
- formation de valeurs de position (P) attribuées aux cadences de détection (t) à partir des signaux de détection (DA, DB) reçus,
- formation d'une valeur de mesure de position (PM) résultante, à partir de plusieurs valeurs de position (P), par filtrage,
- transmission sérielle de cette valeur de mesure de position (PM) sur une ligne de données sérielle (11) vers une électronique d'aval (10).

2. Procédé selon la revendication 1, **caractérisé en ce que** les signaux de détection (A, B) dépendant de la position sont des signaux analogiques sinusoïdaux, décalés en phase les uns par rapport aux autres, chacun de ces signaux analogiques (A, B) étant numérisé au moment de la cadence de détection (t), et une valeur de position (P) étant formée respectivement à partir des valeurs numériques (DA, DB) des signaux de détection (A, B) décalés en phase les uns par rapport aux autres.

3. Procédé selon la revendication 1, **caractérisé en ce que** l'électronique d'aval (10) transmet un signal de cadence continu (T, t") au dispositif de mesure de position (1), à partir duquel la cadence de détection (t) est acquise dans le dispositif de mesure de position (1) par multiplication de fréquence.

4. Procédé selon la revendication 1, **caractérisé en ce que** la valeur de mesure de position (PM) résultante est transmise à la demande du dispositif de mesure de position (1) à l'électronique d'aval (10), la demande s'effectuant sur la base d'une cadence de transmission (T) prédéfinie de l'électronique d'aval (10) à l'interface sérielle bidirectionnelle (9) du dispositif de mesure de position (1), les cadences de transmission (T) étant en outre transmises en vue de la synchronisation des cadences de transmission (T) et des cadences de détection (t) par l'électronique d'aval au dispositif de mesure de position (1), et **en ce qu'**un générateur de cadence (12) du dispositif de mesure de position (1) divise la cadence de transmission (T) en la cadence de détection (t).

5. Procédé selon la revendication 1, **caractérisé en ce que** la cadence de détection (t) est acquise dans le dispositif de mesure de position (1) par réception de cadence à partir d'un flux de données (D) de l'électronique d'aval (10).

6. Procédé selon la revendication 1 ou 2, **caractérisé en ce que** la transmission de la valeur de mesure de position (PM) résultante est générée par une cadence de transmission (T), et **en ce que** l'électronique d'aval (10) comporte un dispositif de régulation d'entraînement avec une cadence de régulation interne, la cadence de transmission (T) et la cadence de détection (t) étant synchronisées avec cette cadence de régulation.

7. Procédé selon la revendication 6, **caractérisé en ce que** la cadence de détection (t) est acquise dans le dispositif de mesure de position (1) par réception de cadence à partir d'un flux de données (D) de l'électronique d'aval (10).

8. Procédé selon la revendication 1, **caractérisé par** les étapes suivantes :
- production d'un signal de détection (F) dépendant de l'accélération d'un capteur d'accélération (20),
- réception de valeurs instantanées du signal de détection (F) à une cadence de détection (t) prédéterminée,
- formation d'une valeur d'accélération (FM) résultante, à partir de plusieurs valeurs instantanées, par filtrage,
- transmission sérielle de cette valeur de mesure d'accélération (FM) sur la ligne de données sérielle (11).

9. Procédé selon l'une des revendications précédentes, **caractérisé en ce que** le filtrage et/ou le nombre de cadences de détection (t) est réglé sur deux cadences de transmission (T) consécutives, à l'aide de paramètres transmis au dispositif de mesure de position (1) par la ligne de données sérielle (11).

10. Procédé selon l'une des revendications précédentes, **caractérisé en ce que** le filtrage et/au le nombre de cadences de détection (t) est réglé sur deux cadences de transmission (T) consécutives, en fonction de la vitesse.

11. Dispositif de mesure de position avec :
- une unité de détection (2) pour la production de plusieurs signaux de détection (A, B) dépendant de la position,
- une unité de réception (3) recevant des valeurs instantanées des signaux de détection (DA, DB) à une cadence de détection (t) prédéterminée,
- un générateur de cadence (12, 12.1) générant les cadences de détection (t) de façon synchronisée à une cadence (T, D, t") fournie par l'électronique d'aval (10),
- une unité de traitement (6), dans laquelle est formée une valeur de mesure de position (PM) résultante, par filtrage à partir des valeurs instantanées (DA, DB) de plusieurs cadences de détection (t),
- une interface (9) transmettant la valeur de mesure de position (PM) résultante à une électronique d'aval (10), sur la base d'une cadence de transmission (T), sur une ligne de données sérielle (11).

12. Dispositif de mesure de position selon la revendication 11, **caractérisé en ce que**
- l'unité de réception (3) comporte au moins un convertisseur A/N, et
- l'unité de traitement (6) contient une unité d'interpolation (7) pour la formation des valeurs de position (P) attribuées aux cadences de détection (t), à partir des signaux de détection (DA, DB) numérisés, ainsi qu'un filtre (8) pour la formation de la valeur de mesure de position (PM) résultante, à partir de plusieurs valeurs de position (P) attribuées aux cadences de détection (t).

13. Dispositif de mesure de position selon la revendication 11, **caractérisé en ce que** le générateur de cadence est un composant (13) pour la récupération de cadence de la cadence de détection (t) à partir d'un flux de données (D) produit dans le dispositif de mesure de position (1).

14. Dispositif de mesure de position selon l'une des revendications 11 à 13, **caractérisé en ce qu'**un capteur d'accélération (20) pour la production d'un signal de détection (F) dépendant de l'accélération est attribué au dispositif de mesure de position (1), et **en ce que** le signal de détection (F) peut être transmis à une unité de traitement (21) pour la formation d'une valeur d'accélération (FM) à partir de plusieurs valeurs instantanées, la valeur d'accélération (FM) résultante pouvant être transmise sur la ligne de données sérielle (11).
